# EUROPÄISCHE PATENTSCHRIFT

(11) **EP 2 937 715 B1**
(45) Veröffentlichungstag und Bekanntmachung des Hinweises auf die Patenterteilung: **25.05.2016**
(21) Anmeldenummer: 15159165.8
(22) Anmeldetag: 16.03.2015
(51) Int. Cl.: G01S 17/42, G01S 7/48, G01S 7/481, G01S 7/497

(54) **Optoelektronischer Sensor und Verfahren zur Erfassung von Messinformationen aus einem Überwachungsbereich**
OPTOELECTRONIC SENSOR AND METHOD FOR DETECTING MEASUREMENT INFORMATION FROM A SURVEILLANCE AREA
CAPTEUR OPTOÉLECTRONIQUE ET PROCÉDÉ DESTINÉ À LA DÉTECTION D'INFORMATIONS DE MESURE DANS UNE ZONE DE SURVEILLANCE

(30) Priorität: 24.04.2014 DE 102014105781
(43) Veröffentlichungstag der Anmeldung: 28.10.2015
(73) Patentinhaber: SICK AG, 79183 Waldkirch (DE)
(72) Erfinder: Weber, Harald, 77855 Achern (DE); Schopp, Thomas, 79112 Freiburg (DE); Pastor, Sebastian, 79194 Gundelfingen (DE)
(74) Vertreter: Hehl, Ulrich

(56) Entgegenhaltungen:
- EP-A2- 2 607 841
- WO-A1-00/57132
- DE-U1-202011 000 365

## Beschreibung

Die Erfindung betrifft einen optoelektronischen Sensor und ein Verfahren zur Erfassung von Messinformationen aus einem Überwachungsbereich nach dem Oberbegriff von Anspruch 1 beziehungsweise 11.

Viele optoelektronische Sensoren erzeugen, anders als beispielsweise eine einfache Lichtschranke, Messinformation in mehr als einer Dimension. Die Messinformationen sind also in einer lateralen Richtung aufgelöst, die sich als Winkelrichtung auffassen lässt. Als Messsystem mit großem horizontalem Winkelbereich eignen sich Laserscanner besonders. In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkelposition des Objektes und häufig zudem aus der Lichtlaufzeit unter Verwendung der Lichtgeschwindigkeit auf die Entfernung des Objektes von dem Laserscanner geschlossen.

Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder deren Kontur bestimmen. Die dritte Raumkoordinate kann durch eine Relativbewegung in Querrichtung ebenfalls erfasst werden, beispielsweise durch einen weiteren Bewegungsfreiheitsgrad der Ablenkeinheit in dem Laserscanner oder indem das Objekt relativ zu dem Laserscanner befördert wird. So können auch dreidimensionale Konturen ausgemessen werden.

Neben solchen Messanwendungen werden Laserscanner auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen. Sicherheitslaserscanner arbeiten meist pulsbasiert.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile, insbesondere einer Frontscheibe, und/oder Vorsehen von einzelnen Testzielen mit definierten Reflexionsgraden, die unter den entsprechenden Scanwinkeln erkannt werden müssen.

Nun ergeben sich bei derartigen Messungen sehr häufig Probleme daraus, dass eine Winkelausrichtung vorgegeben ist. Es wird nämlich ein bestimmter Winkel als Bezugswinkel verwendet. Dies definiert beispielsweise, wo für den Sensor "vorne" ist, oder präziser ausgedrückt, auf welchen Winkelursprung sich die winkelaufgelösten Messdaten beziehen. Üblicherweise wird der Bezugswinkel mechanisch auf ein Gehäuse bezogen, also beispielsweise die Mitte oder eine Seitenkante der Frontscheibe, eine bestimmte Montagefläche oder dergleichen. Die generierten Messdaten aus dem Sichtbereich des Sensors haben dann diesen Winkelbezug und werden auch entsprechend an Schnittstellen des Sensors ausgegeben. Der von dem Gerät vorgegebene Bezugswinkel ist aber in der jeweiligen Anwendung selten passend. So wird beispielsweise ein interessierender Sichtbereich nur ausnahmsweise gerade zufällig durch den Bezugswinkel begrenzt. Die Folge ist, dass das Bezugskoordinatensystem praktisch immer umgerechnet werden muss. Das birgt Fehlerpotential und macht Systeme und Anwendungen kompliziert und kostenaufwändig.

Aus der DE 20 2011 000 365 U1 ist ein Laserscanner bekannt, der wenigstens ein Schutzfeld überwacht. Mit Hilfe einer Drehvorrichtung kann das Schutzfeld entlang einer Drehachse zu einer Montagefläche gedreht werden. Das löst aber das angesprochene Problem nicht. Das Schutzfeld ist ein definierter Teilausschnitt des Überwachungsbereichs und basiert damit auf den bereits erhobenen Messdaten. Für die Messdaten ändert sich der Winkelbezug also nicht. Bei jeder Auswertung von Messdaten einschließlich Schutzfeldauswertungen muss der Anwender wieder wissen und berücksichtigen, wo das Gerät seinen ab Werk fixierten Winkelbezug definiert hat.

Die EP 2 607 841 A2 offenbart ein optisches System, das einen Rotationslaser zur Abtastung einer Azimut-Ebene aufweist. Eine mit der optischen Strahlung gemessene Distanz wird jeweils der Winkelstellung des Rotationslasers zugeordnet. Diese Koordinaten können in ein Koordinatensystem umgerechnet werden, dessen Ursprung und Achsen aus einem Plan entnommen oder durch Benutzerinteraktion bestimmt werden.

Es ist daher Aufgabe der Erfindung, den Umgang mit den Messdaten des Laserscanners zu vereinfachen.

Diese Aufgabe wird durch einen optoelektronischen Sensor und ein Verfahren zur Erfassung von Messinformationen aus einem Überwachungsbereich nach Anspruch 1 beziehungsweise 11 gelöst. Dabei geht die Erfindung von dem Grundgedanken aus, den Winkelursprung oder Bezugswinkel des Sensors einstellbar zu machen. Typischerweise wird dadurch festgelegt, wo in dem Überwachungsbereich die Winkelposition 0° liegt, aber eine abweichende Übereinkunft des Winkelursprungs bei jeder anderen Winkelposition ist ebenso möglich. Die Winkelauflösung bezüglich des Winkelursprungs kann in den Messdaten explizit oder implizit angegeben werden. Eine explizite Angabe wäre beispielsweise die Ausgabe von Tupeln der Art (Winkelposition, Messwert). Bei einer impliziten Angabe bezieht sich eine Messwertreihe durch eine bekannte oder irgendwie gekennzeichnete Position innerhalb der Messreihe, häufig deren ersten Messwert, implizit auf den Winkelursprung. Der Messwert an dieser Position gehört damit zu dem Winkelursprung. Die übrigen Messwerte tragen ihre Winkelauflösung implizit durch ihre Position innerhalb der Messreihe, etwa indem die Messreihe in äquidistanten oder anderen Winkelschritten aufgenommen wird.

Die Erfindung hat den Vorteil, dass durch die flexible Festlegung des Bezugswinkels beziehungsweise Winkelursprungs die Montage erheblich vereinfacht wird, da nicht mehr auf einen werkseitig eingestellten Winkelursprung geachtet werden und dieser nicht einmal mehr bekannt sein muss. Außerdem entfällt eine Koordinatentransformation auf einen gewünschten Winkelursprung einschließlich der dazu erforderlichen Rechenleistung, Anpassung der Auswertung und Fehlersuche.

Der Sensor ist vorzugsweise ein Laserscanner, der einen Lichtsender zum Aussenden eines Abtaststrahls und eine Ablenkeinheit zum periodischen Ablenken des Abtaststrahls aufweist, um durch die Ablenkbewegung den Überwachungsbereich abzutasten und dabei die winkelaufgelösten Messinformationen zu gewinnen. Hier wird also mit Hilfe einer Ablenkeinheit, wie eines Schwing- oder Drehspiegels, eines Polygonrades oder eines insgesamt drehbaren Messkopfes ein Winkelbereich sukzessive und wiederholt abgetastet. Dabei entsteht eine Überwachungsebene, die durch zusätzliches Verkippen der Ablenkeinheit in Querrichtung zu einem dreidimensionalen Raumbereich erweitert werden kann.

Die Auswertungseinheit ist bevorzugt dafür ausgebildet, als Messinformationen Entfernungen zu einem jeweils erfassten Objekt aus einer Lichtlaufzeit zu bestimmen. Der Sensor wird damit zu einem Entfernungsmesser und im Falle einer Ausführungsform als Laserscanner zu einem entfernungsmessenden Laserscanner. Dabei wird nicht nur ein Winkel, sondern mit dem Abstand eine vollständige Position von angetasteten Objektpunkten erfasst. Andere denkbare Messinformationen, die zusätzlich oder alternativ je Winkelposition erfasst werden könnten, sind Intensität oder Farbe. Vorzugsweise wird mit dem Winkelursprung auch ein Nullpunkt der Entfernungsmessung verschoben. Die Entfernung Null wird damit an eine von dem Benutzer bezeichnete Position verlegt, und die Auswertungseinheit berücksichtigt dann vor der Ausgabe von Messdaten den entsprechenden Entfernungsoffset. Es können sich dann auch negative Entfernungen ergeben, die bedeuten, dass ein Objekt näher am Sensor erfasst wurde als die festgelegte Entfernung Null.

Die Auswertungseinheit ist dafür ausgebildet, einen optischen Marker zu erkennen, welcher die durch den Benutzer bezeichnete Winkelposition festlegt. Der Sensor kann auf diese Weise selbsttätig eine durch den Benutzer festlegbare Winkelposition erfassen. Daher sind keine besonderen Hilfsmittel zur Parametrierung des Winkelursprungs, wie ein PC oder dergleichen, und keine Schnittstellen des Sensors erforderlich. Optischer Marker, etwa als Aufkleber, sind zudem ausgesprochen preisgünstig.

Die Auswertungseinheit ist bevorzugt dafür ausgebildet, die Erkennung des optischen Markers als Auslöser für eine neue Festlegung des Winkelursprungs aufzufassen. Schon das Anbringen eines optischen Markers löst dann einen neuen Winkelbezug aus. Der optische Marker kann dafür auch eine besondere Codierung tragen, wie einen Barcode, oder spezielle optische Eigenschaften durch Form, Farbe oder Muster aufweisen, die ihn als optischen Marker zum Festlegen des Winkelursprungs identifiziert. Alternativ zu einer automatischen Erkennung des optischen Markers ist auch ein Bedienelement denkbar, das eine Suche des Sensors nach optischen Markern auslöst.

Der optische Marker ist an einer Frontscheibe des Sensors angeordnet. Das erleichtert dem Benutzer in einem relevanten Umfeld zu erkennen, wo der neue Winkelursprung liegen wird. Umgekehrt hat der Sensor eine klare Vorstellung, wo optische Marker zu suchen sind. Gerade bei entfernungsmessenden Sensoren sind optische Marker auf der Frontscheibe anhand des Abstands leicht zu finden und zu identifizieren.

Der optische Marker ist bevorzugt ein Klebeelement oder ein Magnet. So wird der optische Marker sehr einfach im Überwachungsbereich angebracht, speziell auch an dem Sensor selbst und insbesondere an dessen Frontscheibe. Im letztgenannten Fall kann ein spezieller Kleber für die rückstandslose Entfernung nach Vorgeben des Winkelursprungs verwendet werden. Ein Magnet hinterlässt ohnehin keine Rückstände, aber es könnte an spezielle metallische Gehäusebereiche gedacht werden, die dessen Anbringung ermöglichen. Im Übrigen ist auch denkbar, den optischen Marker gar nicht zu entfernen, sondern beispielsweise im Betrieb als Referenzziel zu verwenden.

Der optische Marker ist bevorzugt streifenförmig. Seine Geometrie besitzt also eine klare Vorzugsrichtung größter Ausdehnung, wie im Falle eines länglichen Rechtecks. Der optische Marker wird dann vorteilhafterweise mit dieser Vorzugsrichtung senkrecht zu der Winkelrichtung angebracht, im Falle eines Laserscanners also senkrecht zu dessen Überwachungsebene. So kann der optische Marker insgesamt ausreichend groß für eine zuverlässige Erfassung, jedoch in Winkelrichtung ausreichend scharf aufgelöst sein.

Der optische Marker ist bevorzugt punktförmig. Das ist hier sehr breit zu verstehen und bedeutet, dass durch den optischen Marker ein Punkt bezeichnet wird. Auch zwei gekreuzte Rechtecke oder ein Stern werden hier also als punktförmig aufgefasst, da sie wie ein Fadenkreuz einen Punkt bezeichnen. Während ein streifenförmiger Marker vorzugsweise einen Winkel innerhalb einer 2D-Ebene festlegt, kann über einen punktförmigen Marker auch der zweite Winkel beispielsweise von Kugelkoordinaten eines 3D-Scanners mit zusätzlicher Verkippung der Abtastebene oder eines Mehrebenenscanners festgelegt werden.

Die Auswertungseinheit legt bevorzugt den Winkelursprung gegenüber der bezeichneten Winkelposition mit einem Versatz fest. Ohne Versatz liegt der neue Winkelursprung gerade an der Winkelposition, die der Benutzer bezeichnet hat, beispielsweise dort, wo der optische Marker angebracht ist. Wegen der endlichen Ausdehnung des optischen Markers wird beispielsweise dessen Schwerpunkt in Winkelrichtung verwendet. Durch einen Versatz kann der Winkelursprung stattdessen beispielsweise dorthin gelegt werden, wo der optische Marker die Sicht nicht mehr beschränkt, also an dessen rechte oder linke Kante. Ein Versatz ermöglicht auch andere Abweichungen, etwa dass die durch den Benutzer bezeichnete Position nicht 0°, sondern 90° oder irgendeinen anderen Wert festlegen soll.

Der Sensor erfasst vorzugsweise Messinformationen aus einem Winkelbereich von zumindest 270°, insbesondere von 360°. Ein derart großer Winkelbereich ist beispielsweise mit einem Laserscanner erreichbar. Vor allem bei einem Rund-Um-Sensor mit 360°, aber mit kleinen Einschränkungen auch bei etwas kleinerem Winkelbereich, legt das Gerät eigentlich weder durch seine Geometrie noch diejenige des Überwachungsbereichs noch einen Winkelursprung fest, dieser wird reine Konvention und eigentlich ausschließlich noch durch einen Blick in das Handbuch erkennbar. Aufgrund der Erfindung wird es nun möglich, den Sensor ohne jede Rücksicht auf einen Winkelursprung zu montieren. Erst anschließend wird dann irgendwo rund um den Sensor eine für die Anwendung bequem passende Richtung festgelegt, die der Sensor als "vorne" ansehen soll, also als Winkelursprung.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Schnittdarstellung durch einen Laserscanner;
- Fig. 2: eine Draufsicht auf eine Ausführungsform eines Laserscanners und dessen Überwachungsbereich bei einem Öffnungswinkel von 190°;
- Fig. 3: eine Draufsicht auf eine Ausführungsform eines Laserscanners und dessen Überwachungsbereich bei einem Öffnungswinkel von 270°; und
- Fig. 4: eine schematische dreidimensionale Ansicht eines Laserscanners zur Veranschaulichung der Festlegung des Winkelursprungs mit einem Klebestreifen;
- Fig. 5: eine schematische dreidimensionale Ansicht eines Laserscanners mit dreidimensionalem Überwachungsbereich zur Veranschaulichung der Festlegung des Winkelursprungs mit einem Klebepunkt; und
- Fig. 6: eine schematische dreidimensionale Ansicht eines Laserscanners ähnlich Figur 5, wobei hier statt eines Klebepunkts ein frei bewegliches Referenzziel verwendet wird.

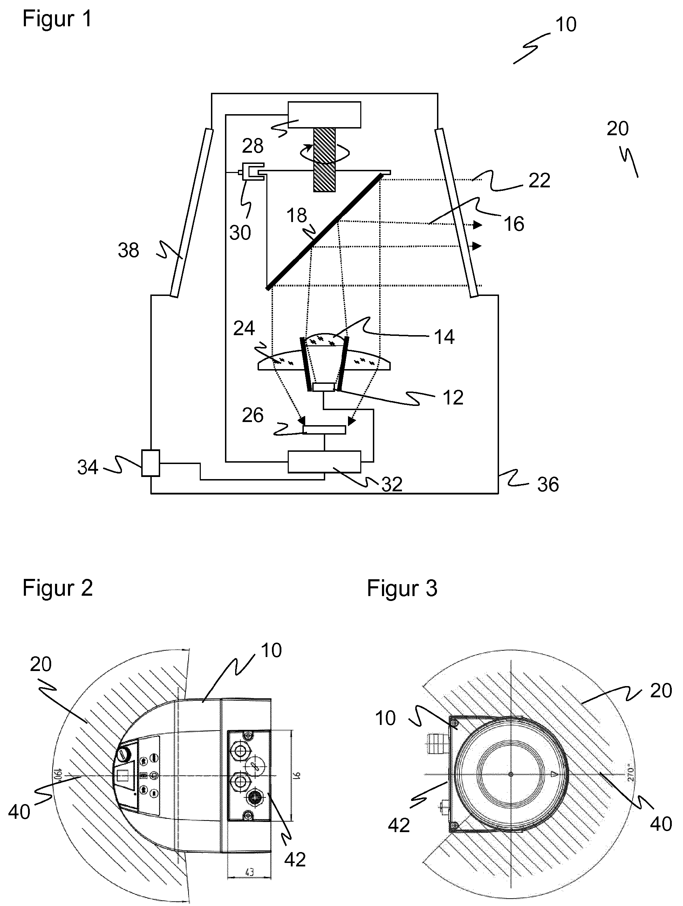

Fig. 1 zeigt eine schematische Schnittdarstellung durch einen optoelektronischen Sensor in einer Ausführungsform als Laserscanner 10. Alternativ sind auch andere optoelektronische Sensoren mit einer Winkelauflösung denkbar. In dem Laserscanner 10 erzeugt ein Lichtsender 12, beispielsweise mit einer Laserlichtquelle, mit Hilfe einer Sendeoptik 14 einen Sendelichtstrahl 16. Der Sendelichtstrahl 16 wird mittels einer Ablenkeinheit 18 in einen Überwachungsbereich 20 ausgesandt und dort von einem gegebenenfalls vorhandenen Objekt remittiert. Das remittierte Licht 22 gelangt wieder zu dem Laserscanner 10 zurück und wird dort über die Ablenkeinheit 18 mittels einer Empfangsoptik 24 von einem Lichtempfänger 26 detektiert, beispielsweise einer Photodiode oder für höhere Empfindlichkeit einer Lawinenphotodiode (APD). Bei dem dargestellten Laserscanner 10 befindet sich der Lichtsender 12 und dessen Sendeoptik 14 in einer zentralen Öffnung der Empfangsoptik 24. Dies ist nur eine beispielhafte Möglichkeit der Anordnung. Die Erfindung umfasst daneben alternative Lösungen, etwa mit einem eigenen Spiegelbereich für den Sendelichtstrahl 16 oder mit Teilerspiegeln.

Die Ablenkeinheit 18 wird von einem Motor 28 in eine kontinuierliche Drehbewegung versetzt, so dass der Sendelichtstrahl 16 eine Ebene als Überwachungsbereich 20 abtastet. Am Außenumfang der Ablenkeinheit 18 ist eine Winkelmesseinheit 30 angeordnet, um die jeweilige Winkelstellung der Ablenkeinheit 18 zu erfassen. Die Winkelmesseinheit 30 wird hier beispielhaft von einer Strichscheibe als Winkelmaßverkörperung und einer Gabellichtschranke als Abtastung gebildet.

Eine Auswertungseinheit 32 ist mit dem Lichtsender 12, dem Lichtempfänger 26, dem Motor 28 und der Winkelmesseinheit 30 verbunden. Die Auswertungseinheit 32 wertet das Empfangssignal des Lichtempfängers 26 aus. In einer Ausführungsform als entfernungsmessender Laserscanner wird dabei die Lichtlaufzeit zwischen Aussenden des Sendelichtstrahls 16 und Empfang von remittiertem Licht 22 gemessen, um unter Verwendung der Lichtgeschwindigkeit auf den Abstand eines angetasteten Objektes von dem Laserscanner 10 zu schließen. Für das Messen von Lichtlaufzeiten sind phasenbasierte Verfahren bekannt, bei denen das kontinuierliche Sendelicht moduliert und die Phasenverschiebung des empfangenen gegenüber dem gesendeten Licht ausgewertet wird. Bei pulsbasierten Verfahren oder Pulslaufzeitverfahren arbeitet der Lichtsender 12 in einem Einzelpulsbetrieb mit verhältnismäßig hohen Pulsenergien, und der Laserscanner 10 misst Objektabstände anhand der Laufzeit zwischen dem Aussenden und Empfangen eines Einzellichtpulses. Denkbar ist auch, dass anstelle von Einzelpulsen Pulsfolgen ausgesandt und die entsprechenden Pulsechos ausgewertet werden, beispielsweise in einer Pseudozufallscodierung oder einem Pulsmittelungsverfahren.

Die jeweilige Winkelstellung, unter welcher dabei der Sendelichtstrahl 16 ausgesandt wurde, ist der Auswertungseinheit von der Winkelmesseinheit 30 bekannt. Somit stehen nach jeder Scanperiode über den Winkel und die Entfernung zweidimensionale Polarkoordinaten aller Objektpunkte in dem Überwachungsbereich 20 zur Verfügung. Damit sind die Objektpositionen beziehungsweise Objektkonturen bekannt und können über eine Schnittstelle 34 übertragen oder am Laserscanner 10 angezeigt werden. Die Schnittstelle 34 dient umgekehrt auch als Parametrierschnittstelle, über welche der Auswertungseinheit 32 Daten eingespielt werden können. Alternativ kann eine eigene Parametrierschnittstelle vorgesehen sein. Bei Anwendungen in der Sicherheitstechnik kann die Schnittstelle 34 sicher ausgebildet, insbesondere ein sicherer Ausgang (OSSD, Output Signal Switching Device) für ein sicherheitsgerichtetes Abschaltsignal bei Erkennen einer Schutzfeldverletzung sein.

Der Laserscanner 10 ist in einem Gehäuse 36 untergebracht, welches eine umlaufende Frontscheibe 38 aufweist. Die Geometrie des Gehäuses 36 und der Frontscheibe 38 sind ebenso wie die Gestaltung von Sende- und Empfangskanal rein beispielhaft zu verstehen. Es sind zahlreiche alternative Konzepte bekannt, bei denen die Erfindung ebenfalls einsetzbar ist. Insbesondere sind dabei Erweiterungen des Laserscanners 10 zu nennen, mit denen mehr als nur eine Ebene überwacht werden kann. Dazu zählen Laserscanner, deren Ablenkeinheit 18 zusätzlich verkippt werden kann, um auch den zweiten Raumwinkel zu variieren. Ein anderes Beispiel sind Laserscanner mit mehreren Abtastebenen beispielsweise durch Rotation mehrerer übereinander angeordneter Sender und Empfänger oder einer insbesondere abstandsmessenden Kamerazeile, wodurch ebenfalls ein dreidimensionaler Raumbereich abgetastet werden kann. Bei derartigen 3D-Scannern wird vorzugsweise nicht nur der Winkel in Rotationsrichtung, sondern auch der Kippwinkel beziehungsweise die vertikale Position erfasst.

Figur 2 zeigt in einer Draufsicht eine weitere Ausführungsform eines Laserscanners 10 mit dessen Überwachungsbereich 20. Die dargestellten Montage- und Bedienelemente des Laserscanners 10 sind für das Verständnis der Erfindung ohne Belang. Dieser Laserscanner 10 hat einen Öffnungswinkel von 190°. Der geräteseitige Winkelursprung 40 liegt hier gerade senkrecht zu einer Montagefläche 42.

Figur 3 zeigt eine Draufsicht auf noch eine andere Ausführungsform eines Laserscanners 10 mit dessen Überwachungsbereich 20, nun mit einem Öffnungswinkel von 270°. Erneut liegt der geräteseitige Winkelursprung 40 senkrecht zu einer Montagefläche 42.

Dies sind nur Beispiele für mögliche Winkelbereiche beziehungsweise Öffnungswinkel, und auch Ausführungsformen mit anderen Öffnungswinkeln, insbesondere größeren Öffnungswinkeln von bis zu 360° sind möglich. Der geräteseitige Winkelursprung 40 kann im Prinzip beliebig festgelegt werden, passt aber regelmäßig in der jeweiligen Anwendung nicht zu einer Richtung, die der Anwender als Winkelursprung auszeichnen möchte.

Deshalb ist die Auswertungseinheit 32 in der Lage, den Winkelursprung, der als Bezugswinkel für ausgegebene Messdaten verwendet wird, innerhalb des Öffnungswinkels beliebig neu festzulegen. Intern wird das beispielsweise als Winkeloffset des gewünschten Winkelursprungs gegenüber dem geräteseitigen Winkelursprung 40 verarbeitet. Der gewünschte Winkelursprung kann dabei zunächst allgemein auf beliebige Weise eingegeben werden, etwa als Parameter über die Schnittstelle 34 oder mit Hilfe eines Drehrings, der beispielsweise eine Einkerbung oder sonstige Markierung für den gewünschten Winkelursprung hat, die dann so gedreht wird, wie die Anwendung den gewünschten Winkelursprung gern legen würde.

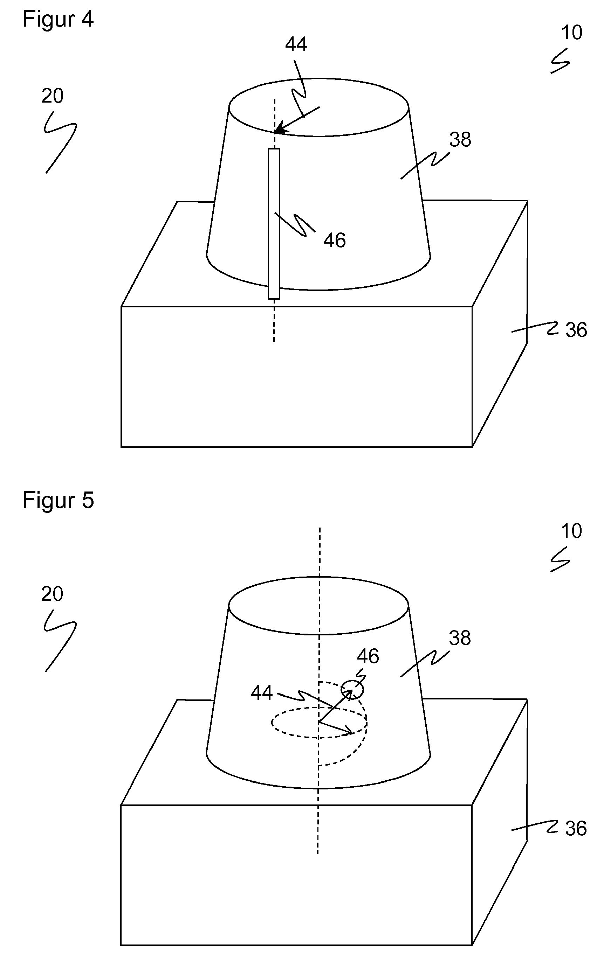

In einer erfindungsgemäßen Ausführungsform, die in Figur 4 anhand einer schematischen dreidimensionalen Außenansicht eines Laserscanners 10 dargestellt ist, wird ein gewünschter Winkelursprung 44 durch einen optischen Marker 46 festgelegt. Der Anwender bringt dazu den vorzugsweise dünnen optischen Marker 46 beispielsweise in Form eines Klebestreifens an der Frontscheibe 38 an. Der Laserscanner 10 detektiert daraufhin eigenständig oder auf Anforderung die Position des optischen Markers 46 und legt dessen Winkelposition als den neuen gewünschten Winkelursprung 44 fest. In Figur 4 wird dazu der Schwerpunkt in Winkelrichtung, also die Mitte der kurzen Seite des optischen Markers 46 verwendet. Eine der Kanten des optischen Markers 46 oder ein zusätzliches Offset wären aber ebenso denkbar. Der Winkelursprung 44 bezeichnet gewöhnlich die 0°-Position, aber auch hiervon kann abgewichen werden.

Besonders vorteilhaft ist diese Art der Vorgabe eines gewünschten Winkelursprungs 44, wenn der Laserscanner 10 über einen großen Öffnungswinkel idealerweise von 360° verfügt. Dann kann der Anwender die Montageposition und Montageausrichtung völlig frei von einem Winkelursprung an seine Gegebenheiten anpassen und erst dann nach erfolgter Installation durch das Aufbringen des optischen Markers 46 den gewünschten Winkelursprung 44 und damit die Winkelausrichtung festlegen.

Figur 5 zeigt nochmals eine schematische dreidimensionale Außenansicht eines Laserscanners 10, der im Unterschied zu demjenigen der Figur 4 einen dreidimensionalen Überwachungsbereich 20 erfassen kann. Dazu ist wie schon mehrfach angesprochen beispielsweise die Ablenkeinheit 18 zusätzlich verkippbar oder eine Mehrebenenabtastung vorgesehen. Für einen derartigen 3D-Scanner wird vorzugsweise nicht nur der Winkelursprung für den bisher erläuterten Winkel in Umlaufrichtung der Ablenkeinheit 18, sondern auch für den vertikalen Winkel festgelegt. Der vertikale Winkel ist entweder der Kippwinkel, welcher die dritte Kugelkoordinate bildet, oder der einem Abstand der mehreren Ebenen entsprechende Winkel.

Bei dem als 3D-Scanner ausgebildeten Laserscanner 10 gemäß Figur 5 kann also der Nullpunkt oder Winkelursprung nicht nur horizontal innerhalb der Ebene, sondern auch vertikal in einer dazu senkrechten Richtung festgelegt werden. Um einen gewünschten Winkelursprung 44 einschließlich der vertikalen Position festzulegen, kann ein punktförmiger optischer Marker 46 verwendet werden, der analog der Ausführungsform gemäß Figur 4 als Klebepunkt zum Aufkleben auf die Frontscheibe 38 ausgebildet sein kann. Durch diese Geometrie des optischen Markers 46 wird sowohl die horizontale als auch die vertikale Position erfassbar.

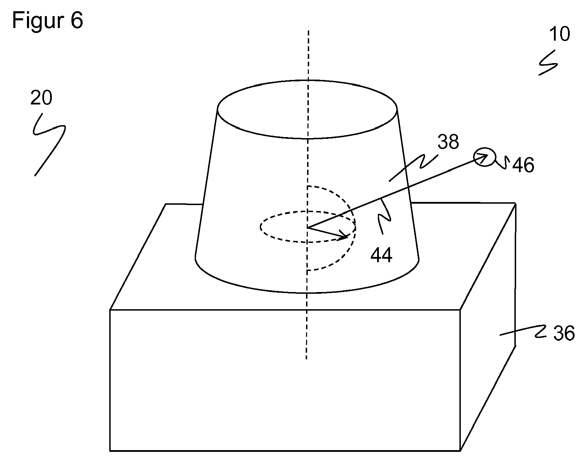

Figur 6 zeigt eine eine Vergleichsvariante der Ausführungsform gemäß Figur 5, die sich darin unterscheidet, dass der optische Marker 46 nicht direkt am Laserscanner 10 befestigt ist, sondern frei im Raum innerhalb des Überwachungsbereichs 20 liegt. Hier kann wiederum über den optischen Marker 46 der Winkelursprung definiert werden. Zusätzlich ergibt sich die Möglichkeit, den optischen Marker 46 auch als Nullpunkt der Entfernungsmessung zu definieren. Der optische Marker 46 bezeichnet dann den Punkt (0, 0°, 0°), und größere Entfernungen zum Laserscanner 10 werden positiv, kleinere Entfernungen negativ. Alternativ bezeichnet der optische Marker 46 nicht nur einen Winkelursprung, sondern insgesamt den Ursprung für alle drei Kugelkoordinaten des räumlichen Koordinatensystems der Messdaten des Laserscanners 10, die selbstverständlich vor der Ausgabe an den Benutzer in gewohntere kartesische Koordinaten umgerechnet werden können. Dabei kann bei Bedarf eine Achse auf den Strahl von Laserscanner 10 zu optischem Marker 46 gelegt, also ein verkipptes Koordinatensystem gewählt werden. Das Anbringen des optischen Markers 46 frei im Raum samt Neufestlegung des Entfernungsnullpunkts ist auch im zweidimensionalen Fall beispielsweise gemäß Figur 4 denkbar.

## Patentansprüche

1. Optoelektronischer Sensor (10) zur Erfassung von Messinformationen aus einem Überwachungsbereich (20), wobei der Sensor (10) einen Lichtempfänger (26) und eine Auswertungseinheit (32) zum Erzeugen von bezüglich eines Winkelursprungs (40, 44) winkelaufgelösten Messinformationen aus einem Empfangssignal des Lichtempfängers (26) aufweist, wobei die Auswertungseinheit (32) dafür ausgebildet ist, einen optischen Marker (46) zu erkennen, welcher eine durch einen Benutzer bezeichnete Winkelposition (44) festlegt, und den Winkelursprung (40, 44) an die bezeichnete Winkelposition (44) zu verschieben **dadurch gekennzeichnet,**
**dass** der optische Marker (46) an einer Frontscheibe (38) des Sensors (10) angeordnet ist.

2. Sensor (10) nach Anspruch 1,
wobei der Sensor (10) ein Laserscanner ist, der einen Lichtsender (12) zum Aussenden eines Abtaststrahls (16) und eine Ablenkeinheit (18) zum periodischen Ablenken des Abtaststrahls (16) aufweist, um durch die Ablenkbewegung den Überwachungsbereich (20) abzutasten und dabei die winkelaufgelösten Messinformationen zu gewinnen.

3. Sensor (10) nach Anspruch 1 oder 2,
wobei die Auswertungseinheit (32) dafür ausgebildet ist, als Messinformationen Entfernungen zu einem jeweils erfassten Objekt aus einer Lichtlaufzeit zu bestimmen und insbesondere mit dem Winkelursprung auch einen Nullpunkt der Entfernungsmessung zu verschieben.

4. Sensor (10) nach einem der vorhergehenden Ansprüche,
wobei die Auswertungseinheit (32) dafür ausgebildet ist, die Erkennung des optischen Markers (46) als Auslöser für eine neue Festlegung des Winkelursprungs (44) aufzufassen.

5. Sensor (10) nach einem der vorhergehenden Ansprüche,
wobei der optische Marker (46) ein Magnet ist und wobei der Sensor (10) in einem Gehäuse (36) untergebracht ist, welches die Frontscheibe (38) und metallische Gehäusebereiche zur Anbringung des Magneten aufweist.

6. Sensor (10) nach einem der vorhergehenden Ansprüche,
wobei der optische Marker (46) ein Klebeelement ist.

7. Sensor (10) nach einem der vorhergehenden Ansprüche,
wobei der optische Marker (46) streifenförmig ist.

8. Sensor (10) nach einem der Ansprüche 1 bis 6,
wobei der optische Marker (46) punktförmig ist.

9. Sensor (10) nach einem der vorhergehenden Ansprüche,
wobei die Auswertungseinheit (32) den Winkelursprung gegenüber einer Position des optischen Markers mit einem Versatz festlegt.

10. Sensor (10) nach einem der vorhergehenden Ansprüche,
wobei der Sensor (10) Messinformationen aus einem Winkelbereich von zumindest 270°, insbesondere von 360° erfasst.

11. Verfahren zur Erfassung von Messinformationen aus einem Überwachungsbereich (20), wobei aus Empfangslicht aus dem Überwachungsbereich (20) ein Empfangssignal erzeugt und ausgewertet wird, um bezüglich eines Winkelursprungs (40, 44) winkelaufgelöste Messinformationen zu gewinnen, wobei ein optischer Marker (46) erkannt wird, welcher eine durch einen Benutzer bezeichnete Winkelposition (44) festlegt, und der Winkelursprung (40, 44) an die bezeichnete Winkelposition (44) verschoben wird,
**dadurch gekennzeichnet,**
**dass** der optischer Marker (46) an einer Frontscheibe (38) des Sensors (10) angeordnet wird.

## Claims

1. An optoelectronic sensor (10) for acquiring measurement information from a monitoring area (20), wherein the sensor (10) comprises a light receiver (26) and an evaluation unit (32) for generating measurement information having an angular resolution with respect to an angle of origin (40, 44) from a reception signal of the light receiver (26), wherein the evaluation unit (32) is configured to detect an optical marker (46) which defines an angular position (44) designated by a user, and to shift the angle of origin (40, 44) to the designated angular position (44),
**characterized in that** the optical marker (46) is arranged at a front screen (38) of the sensor (10).

2. The sensor (10) according to claim 1,
wherein the sensor (10) is a laser scanner comprising a light transmitter (12) for transmitting a scanning beam (16) and a deflection unit (18) for periodically deflecting the scanning beam (16) in order to scan the monitoring area (20) by the deflection movement and thus to obtain the measurement information having an angular resolution.

3. The sensor (10) according to claim 1 or 2,
wherein the evaluation unit (32) is configured to determine the distance to a respectively scanned object from a light time of flight as measurement information, and in particular to also shift a point of origin of the distance measurement together with the angle of origin.

4. The sensor (10) according to any of the preceding claims,
wherein the evaluation unit (32) is configured to use the detection of the optical marker (46) as a trigger for a new determination of the angle of origin (44).

5. The sensor (10) according to any of the preceding claims,
wherein the optical marker (46) is a magnet, and wherein the sensor (10) is arranged in a housing (36) which comprises the front screen (38) and metallic housing parts for attaching the magnet.

6. The sensor (10) according to any of the preceding claims,
wherein the optical marker (46) is an adhesive member.

7. The sensor (10) according to any of the preceding claims,
wherein the optical marker (46) is stripe-shaped.

8. The sensor (10) according to any of the preceding claims,
wherein the optical marker (46) is point-shaped.

9. The sensor (10) according to any of the preceding claims,
wherein the evaluation unit (32) defines the angle of origin with an offset with respect to a position of the optical marker.

10. The sensor (10) according to any of the preceding claims,
wherein the sensor (10) detects measurement information with an angular range of at least 270°, in particular of 360°.

11. A method for acquiring measurement information from a monitoring area (20), wherein a reception signal is generated from reception light from the monitoring area (20) and the reception signal is evaluated to obtain measurement information having an angular resolution with respect to an angle of origin (40, 44), wherein an optical marker (46) is detected which defines an angular position (44) designated by a user, and the angle of origin (40, 44) is shifted to the designated angular position (44),
**characterized in that** the optical marker (46) is arranged at a front screen (38) of the sensor (10).

## Revendications

1. Capteur optoélectronique (10) pour la détection d'informations de mesurage depuis une zone de surveillance (20), dans lequel le capteur (10) comprend un récepteur de lumière (26) et une unité d'évaluation (32) pour engendrer des informations de mesurage à résolution angulaire par référence à une origine angulaire (40, 44) à partir d'un signal de réception du récepteur de lumière (26), dans lequel l'unité d'évaluation (32) est réalisée pour reconnaître un marqueur optique (46) qui fixe une position angulaire (44) désignée par un utilisateur, et pour déplacer l'origine angulaire (40, 44) à la position angulaire désignée (44),
**caractérisé en ce que** le marqueur optique (46) est agencé sur une plaque frontale (38) du capteur (10).

2. Capteur (10) selon la revendication 1,
dans lequel le capteur (10) est un scanner à laser qui comprend un émetteur de lumière (12) pour émettre un rayon de palpage (16) et une unité de déflexion (18) pour la déflexion périodique du rayon de palpage (16), afin de palper la zone de surveillance (20) par le mouvement de déflexion et de récupérer ainsi les informations de mesurage à résolution angulaire.

3. Capteur (10) selon la revendication 1 ou 2,
dans lequel l'unité d'évaluation (32) est réalisée pour déterminer à titre d'information de mesurage des éloignements à un objet respectivement détecté, à partir d'un temps de parcours de la lumière, et en particulier pour déplacer conjointement avec l'origine angulaire également un point zéro de la mesure d'éloignement.

4. Capteur (10) selon l'une des revendications précédentes,
dans lequel l'unité d'évaluation (32) est réalisée pour appréhender la reconnaissance du marqueur optique (46) à titre de déclenchement pour une nouvelle fixation de l'origine angulaire (44).

5. Capteur (10) selon l'une des revendications précédentes,
dans lequel le marqueur optique (46) est un aimant et dans lequel le capteur (10) est logé dans un boîtier (36) qui comprend la plaque frontale (38) et des zones de boîtier métalliques pour l'application de l'aimant.

6. Capteur (10) selon l'une des revendications précédentes,
dans lequel le marqueur optique (46) est un élément collant.

7. Capteur (10) selon l'une des revendications précédentes,
dans lequel le marqueur optique (46) est en forme de ruban.

8. Capteur (10) selon l'une des revendications 1 à 6,
dans lequel le marqueur optique (46) est sous forme ponctuelle.

9. Capteur (10) selon l'une des revendications précédentes,
dans lequel l'unité d'évaluation (32) fixe l'origine angulaire avec un décalage par rapport à une position du marqueur optique.

10. Capteur (10) selon l'une des revendications précédentes,
dans lequel le capteur (10) détecte des informations de mesurage à partir d'une plage angulaire d'au moins 270°, en particulier de 360°.

11. Procédé pour la détection d'informations de mesurage à partir d'une zone de surveillance (20), dans lequel on engendre et on évalue un signal de réception à partir de la lumière reçue provenant de la zone de surveillance (20), afin de récupérer des informations de mesurage à résolution angulaire par référence à une origine angulaire (40, 44), dans lequel on reconnaît un marqueur optique (46) qui fixe une position angulaire (44) désignée par un utilisateur, et l'origine angulaire (40, 44) est déplacée à la position angulaire désignée (44),
**caractérisé en ce que** le marqueur optique (46) est agencé sur une plaque frontale (38) du capteur (10).
